# EUROPEAN PATENT SPECIFICATION

(11) **EP 0 986 446 B1**
(45) Date of publication and mention of the grant of the patent: **08.01.2003**
(21) Application number: 98923274.9
(22) Date of filing: 15.05.1998
(51) Int. Cl.: B22F 3/15, F27B 17/00, B01J 3/04

(54) **A DEVICE IN A PRESSURE VESSEL FOR HOT ISOSTATIC PRESSING**
VORRICHTUNG IN EINEM DRUCKKESSEL ZUM HEISSISOSTATISCHEN PRESSEN
DISPOSITIF DE CUVE SOUS PRESSION DESTINE A LA COMPRESSION ISOSTATIQUE A CHAUD

(30) Priority: 16.05.1997 SE 9701852
(43) Date of publication of application: 22.03.2000
(73) Proprietor: Flow Holdings GmbH (SAGL) Limited Liability Company, 6919 Carabietta (CH)
(72) Inventor: BERGMAN, Carl, S-723 41 Västeräs (SE)
(74) Representative: Henningsson, Gunnar
(86) International application number: PCT/SE98/00903
(87) International publication number: WO 98/051434

(56) References cited:
- DE-A- 2 749 614
- US-A- 4 217 087
- US-A- 4 509 729
- US-A- 5 366 689

## Description

### FIELD OF THE INVENTION AND PRIOR ART

The present invention relates to a device in a pressure vessel for hot isostatic pressing comprising a furnace chamber surrounded by a heat insulating member, a load carrier arranged in the chamber and having one or more shelf planes perforated for gas flow therethrough and adapted to carry loads to be pressed, and an arrangement arranged in the chamber and having heating elements for heating the gas present in the chamber, said load carrier having surrounding lateral walls and being arranged with a space between the latters and the insulating member for allowing a flow of gas therebetween from the top and downwardly around the carrier, at least the heating elements producing the main part of heating being arranged in the bottom region of the chamber.

Hot isostatic pressing (HIP=Hot Isostatic Pressing) is a technique being more and more used thanks to the extraordinary results obtained thereby, and this technique is used e.g. to achieve a pressing out of so-called "shrinkages" in castings through heating in combination with very high gas pressures in said furnace chamber, such as for turbine blades for aircraft, so as to substantially increase the strength and lifetime thereof. Another field of use is manufacturing of products of a very compact material free from pores through compressing of powder and at the same time heating thereof.

Typical pressures in hot isostatic pressing are 500-5 000 bars, in which the temperature usually varies between 500 and 2 200°C. A temperature being approximately 75% of the fusion temperature of the material in question is normally selected. An inert gas, such as argon, is usually used as pressure medium.

A device of the type defined in the introduction is already known through e.g. US 4 217 087. The heating elements are in this device placed in the furnace chamber below the load carrier and in the vertical direction along the load carrier so as to ensure that the temperature difference between different parts of the furnace chamber gets as low as possible and by that the loads present simultaneously in the furnace chamber gets substantially the same treatment with the same result as a consequence thereof. The manufacturing of said insulating member gets comparatively complicated as a consequence of the sensitive heating elements to be arranged therealong. Furthermore, a careful regulation of the heating elements is required so as to obtain a desired temperature profile in the furnace chamber.

US-A-5 366 689 discloses the same kind of device in which the heater is arranged below the load carrrier.

### SUMMARY OF THE INVENTION

The object of the present invention is to provide a device of the type defined in the introduction, in which the disadvantages mentioned above of such devices already known have been reduced substantially by making the device simpler and by improving self convection of gases flowing through the furnace chamber, but nevertheless without renounce of reliable function and a good result of the hot isostatic pressing.

This object is according to the invention obtained by the fact that in such a device at least considerable portions of said lateral walls of the carrier are provided with layers having a good heat insulating capacity, so that the temperature difference between the inner side of said lateral walls and the space between the outside thereof and the insulation member is increased and by that a driving force for a self convection of said gases is obtained.

The temperature difference between the inner side of said lateral walls and the space between the outside thereof and the insulating member will be increased by the provision of said lateral walls with layers having a good heat insulating capacity, so that a very good driving force for a self convection of said gases will be obtained.

The temperature in the furnace chamber will be balanced in the vertical direction thereof by self convection, since the gases heated when passing the heating elements in the bottom region will rise in the furnace chamber, and the driving force for this rising movement is dependant upon the temperature difference between the space inside the lateral walls of the load carrier and the space between said lateral walls and the insulating member. A reduction of the temperature differences within the load carrier is obtained by this increased driving force for self convection, and this balancing gets even better by the loss of less energy through said lateral walls of the load carrier in the way of the gases upwardly through the load carrier through the good insulation of the lateral walls in the device according to the invention. Thus, the temperature differences between different parts within the space of the very load carrier may be kept at an acceptable low level although at least the heating elements producing the main part of the heating of the heating arrangement are arranged in the bottom region of the chamber, which has several advantages. Firstly, the very insulating member may be produced in a simpler way without any sensitive heating elements on the inner side thereof. Furthermore, it is easy to generate the heat required in the bottom region of a furnace chamber. Material being too fragile for being able to be drawn upwardly along the walls and there be used as heating elements, because it could be broken, may now be used as heating elements in an arrangement thereof in the bottom region, so that more cost efficient material may be used for the heating.

According to a preferred embodiment of the invention all the heating elements of the heating arrangement are arranged in the bottom region of the chamber. This makes a building of the device extremely simple and by that both produceable at a low cost and very reliable with respect to the function thereof.

According to another preferred embodiment of the invention said layers having a good heat insulating capacity extend over substantially the entire lateral walls of the carriers. A further increased temperature difference between the two sides of the wall of the load carrier and by that an increased driving force for said convection or the natural convection is obtained in this way, which in combination with that even less heat gets lost through the wall at the way upwardly in the load carrier of the gases results in an increased temperature balancing in the vertical direction of the load carrier.

According to another preferred embodiment of the invention said layers having a good heat insulating capacity are arranged externally of and on lateral walls belonging to a framework of the carrier. Load carriers already present without any such heat insulating layer may by means of such an arrangement of the heat insulating layer afterwards be provided with such a heat insulating layer by application thereof on said lateral walls.

According to another preferred embodiment of the invention said lateral walls of the load carrier are at the bottom arranged to extend substantially past and surround the heating elements of the heating arrangement arranged in said bottom region for conducting gases flowing downwardly in said space from below and upwardly past the heating elements for heating thereof. Such a design of the lateral walls and a localization of the heating elements result in a very good heat transfer between the heating elements and the gases flowing inside the furnace chamber.

According to another preferred embodiment of the invention the heating arrangement has thin plates placed in the bottom region of the chamber concentrically inside each other with mutual spaces therebetween with a centre axis directed upwardly and arranged to carry heating elements arranged thereon in the spaces therebetween, so that gas is allowed to flow between said plates past the heating elements. An arrangement of such concentric plates for carrying the heating elements, which also guide said gases past the heating elements, means that a very efficient transfer of heat from the heating elements to the gases may take place while ensuring a good gas flow through the heating arrangement and upwardly through the load carrier.

Further advantages and advantageous characteristics of the invention will appear from the following description as well as the other dependent claims.

### BRIEF DESCRIPTION OF THE DRAWING

With reference to the appended drawing, below follows a description of a preferred embodiment of the invention cited as an example. In the drawing:

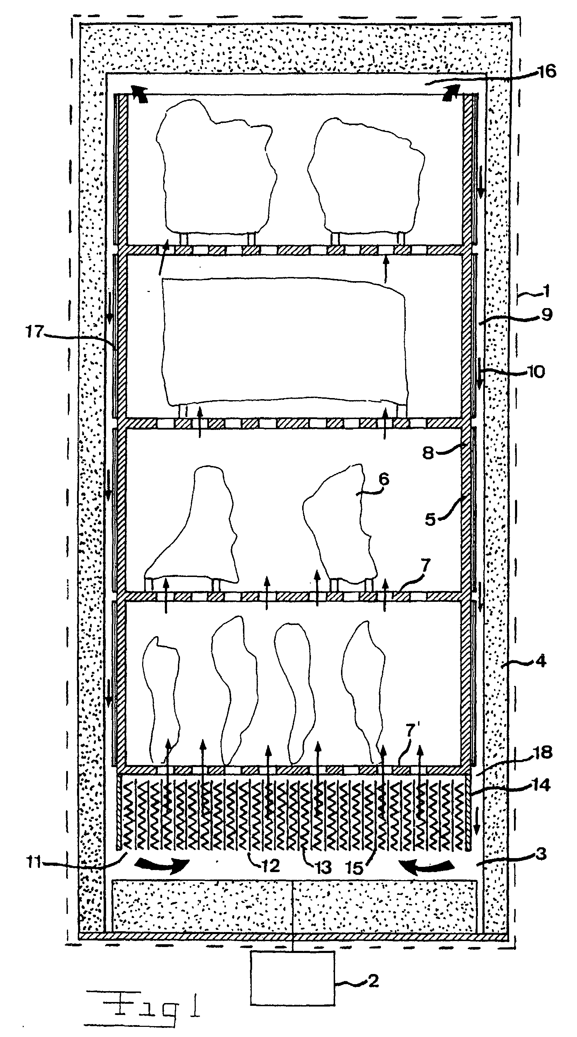

The only fig 1 is a section-view illustrating a device according to a preferred embodiment of the invention in a pressure vessel for hot isostatic pressing.

### DESCRIPTION OF A PREFERRED EMBODIMENT OF THE INVENTION

The construction of a device in a pressure vessel for hot isostatic pressing according to a preferred embodiment of the invention is schematically illustrated in fig 1. The walls of such a pressure vessel, which usually include a powerful reinforcement by many windings of music wires for resisting the high pressures generated inside the vessel, have only been indicated in the figures by dashing 1, since the construction of such vessels are well known and has nothing to do with the present invention. Furthermore, a compressor is schematically indicated through a box 2 and is adapted to pump a gas, preferably an inert gas as argon, into a furnace chamber 3 while compressing it so as to obtain a very high gas pressure, e.g. in the order of 500-5 000 bars, in the furnace chamber. The device has a heat insulating member or envelope 4, which surrounds the furnace chamber 3 and is arranged for keeping the heat dissipation to the surrounding pressure vessel wall 1 low.

A carrier 5 for loads/charges 6 to be heated and pressed, a so-called load basket, is arranged in the furnace chamber 3. The load basket has a number of superimposed shelf planes 7, which are perforated for allowing a good gas flow therethrough, and the total hole surface is e.g. about 30% of the total area of the respective shelf. By arranging a plurality of such shelf planes in the carrier a higher number of loads may be treated simultaneously, but this means also a higher risk of treating different loads in different ways, i.e. they will have different temperatures depending upon how high they are arranged in the load basket. This is very important to avoid and is avoided in a satisfying degree by the device according to the invention. The load basket 5 has also surrounding lateral walls 8, which are arranged so that a space 9 is formed between the load basket and the insulating member for allowing a flow of gas therebetween from the top and downwardly around the carrier, as indicated by the arrows 10.

The shape of the insulating member and the load basket is as usually in these contexts cylindrical because the outer walls of the pressure vessel have to be cylindrical for resisting the high pressures generated inside the vessel.

An arrangement 12 with heating elements 13 is arranged in the bottom region 11 of the furnace chamber for heating gas present in the chamber. The heating arrangement is arranged under the lowermost shelf plane 7' of the load carrier 5 and internally of a prolongation 14 of the lateral walls 8 substantially past the heating arrangement for conducting gases flowing in the space 9 downwardly from below and upwardly past the heating elements 13 for heating thereof.

The heating arrangement has thin plates 15 placed inside each other with a mutual space and with a centre axis directed upwardly, and these plates are adapted to carry heating elements 13 arranged thereon in the spaces therebetween, so that gas is allowed to flow between said plates past the heating elements. The number of plates is in practise substantially higher and they are arranged substantially closer to each other than shown in the figure, which is only used for explaining the ideas of the invention.

By means of this way to arrange a so-called bottom heater 12 in the furnace chamber gases heated by the heating elements 13 will through self-convection flow upwardly through the furnace chamber for balancing the temperature therein. The gas will then at the upper end 16 of the furnace chamber flow back in the space 9 at the outer side of the load basket downwardly to the bottom region of the furnace chamber for being reheated there.

Layers 17 with a good heat insulating capacity are arranged on the outside of the lateral walls 8. These layers may e.g. be formed by ceramic fibres. A reduced heat transfer through the lateral walls of the load basket to the space 9 is obtained through the layers, so that the temperature difference between the interior of the load basket and the exterior thereof will be larger than without these insulating layers. The thicker insulating layers, or more correctly the higher the heat insulating capacity thereof, the larger will said temperature difference be. This temperature difference is directly decisive for the driving force for said self convection, so that the driving force may be increased substantially through the arrangement of the layers 17 with respect to the case of absence of such layers. This increased velocity of the gases through the furnace chamber will result in an improved balancing of the temperature in the vertical direction thereof, so that e.g. in the case of a temperature of about 1 150°C above the lower shelf plane 7' of the load basket the temperature at the upper end 16 may be less than 10 K lower. It may be mentioned that in such a case a temperature drop from the upper end 16 to the lower end 18 of the space 9 could be in the order of 30 K.

The hot gases will soften and treat the loads 6 thanks to the very high pressure they have in the way described in the introduction.

The invention is of course not in any way restricted to the preferred embodiment described above, but many possibilities to modifications thereof would be apparent to a man skilled in the art, without departing from the basic idea of the invention.

It would e.g. be possible to make the insulating layer continuous as one single piece.

The very heating arrangement could be designed in many other ways, but it is essential that it is arranged in the bottom region of the furnace chamber, although it would in principle be conceivable to arrange any small heating element, which has only a power being a fraction of the total power of the heating elements arranged in the bottom region, anywhere higher in the furnace chamber for any smaller regulation.

## Claims

1. A device in a pressure vessel for hot isostatic pressing comprising a furnace chamber (3) surrounded by a heat insulating member (4), a load carrier (5) arranged in the chamber and having one or more shelf planes (7) perforated for gas flow therethrough and adapted to carry loads to be pressed, and an arrangement (12) arranged in the chamber and having heating elements (13) for heating the gas present in the chamber, said load carrier having surrounding lateral walls (8) and being arranged with a space (9) between the latters and the insulating member for allowing a flow of gas therebetween from the top and downwardly around the carrier, at least the heating elements producing the main part of the heating of the heating arrangement being arranged in the bottom region (11) of the chamber, **characterized in that** at least considerable portions of said lateral walls of the carrier are provided with layers (17) having a good heat insulating capacity, so that the temperature difference between the inner side of said lateral walls and the space between the outside thereof and the insulation member is increased and by that a driving force for a self convection of said gases is obtained.

2. A device according to claim 1, **characterized in that** all the heating elements (13) of the heating arrangement (12) are arranged in the bottom region (11) of the chamber.

3. A device according to claim 1 or 2, **characterized in that** said heating elements (13) arranged in the bottom region (11) of the chamber are arranged under the lowermost shelf plane (7') of the load carrier.

4. A device according to any of claims 1-3, **characterized in that** said layers (17) having a good heat insulating capacity are arranged at least along surfaces of the lateral walls located externally of such volumes of the carrier (5) which are designed to be able to receive loads.

5. A device according to any of claims 1-4, **characterized in that** said layers (17) having a good heat insulating capacity extend over substantially the entire lateral walls (8) of the carrier (5).

6. A device according to any of claims 1-5, **characterized in that** said layers (17) having a good heat insulating capacity are one single continuous layer.

7. A device according to any of claims 1-6, **characterized in that** said layers (17) having a good heat insulating capacity are arranged externally of and on lateral walls (8) belonging to a framework of the carrier.

8. A device according to any of claims 1-7, **characterized in that** said lateral walls (8) of the load carrier (5) are at the bottom arranged to extend substantially past and surround the heating elements (13) of the heating arrangement arranged in said bottom region (11) for conducting gases flowing downwardly in said space (9) from below and upwardly past the heating elements for heating thereof.

9. A device according to any of claims 1-8, **characterized in that** the heating arrangement has thin plates (15) placed in the bottom region (11) of the chamber concentrically inside each other with mutual spaces therebetween with a centre axis directed upwardly and arranged to carry heating elements (13) arranged thereon in the spaces therebetween, so that gas is allowed to flow between said plates past the heating elements.

10. A device according to claim 9, **characterized in that** said heating elements are formed by electrically heated resistance wires (13).

## Patentansprüche

1. Vorrichtung in einem Druckgefäß für isostatisches Heißpressen, welches eine Ofenkammer (3) enthält, die von einem wärmeisolierenden Glied (4) umgeben ist, welches ferner einen Lastträger (5) enthält, der in der Kammer angeordnet ist und eine oder mehrere Fachebenen (7) aufweist, die für den Durchtritt eines Gasstromes perforiert sind und zum Tragen von zu pressenden Lasten geeignet sind, und welches ferner eine in der Kammer angeordneten Anordnung (12) enthält, die Heizelemente (13) zum Heizen des in der Kammer vorhandenen Gases aufweist, wobei der Lastträger ihn umgebende Seitenwände (8) hat und mit einem Spaltraum (9) zwischen den genannten Seitenwänden (8) und dem Isolierglied angeordnet ist, damit ein Gasstrom durch diesen Spaltraum von oben nach unten um den Träger herum strömen kann, wobei mindestens die Heizelemente, die den Hauptteil der Wärme der Heizanordnung erzeugen, in dem Bodenbereich (11) der Kammer angeordnet sind, **dadurch gekennzeichnet, daß** mindestens beträchtliche Abschnitte der genannten Seitenwände des Trägers mit Schichten (17) versehen sind, die eine hohe Wärmeisolierfähigkeit haben, so daß die Temperaturdifferenz zwischen der Innenseite der genannten Seitenwände und dem Spaltraum zwischen der Außenseite der Seitenwände und dem Isolierglied vergrößert und dadurch eine Antriebskraft für die Selbstkonvektion der genannten Gase geschaffen wird.

2. Vorrichtung nach Anspruch 1, **dadurch gekennzeichnet, daß** alle Heizelemente (13) der Heizanordnung (12) in dem Bodenbereich (11) der Kammer angeordnet sind.

3. Vorrichtung nach Anspruch 1 oder 2, **dadurch gekennzeichnet, daß** die genannten Heizelemente (13) im Bodenbereich (11) der Kammer unter der untersten Fachebene (7') des Lastträgers angeordnet sind.

4. Vorrichtung nach einem der Ansprüche 1 bis 3, **dadurch gekennzeichnet, daß** die genannten Schichten (17) mit der guten Wärmeisolierfähigkeit mindestens an Flächen der seitlichen Wände angeordnet sind, die außerhalb solcher Räume des Trägers (5) liegen, die zur Aufnahme von Lasten ausgebildet sind.

5. Vorrichtung nach einem der Ansprüche 1 bis 4, **dadurch gekennzeichnet, daß** die genannten eine gute Wärmeisolierfähigkeit aufweisenden Schichten (17) sich im wesentlichen über die gesamten seitlichen Wände (8) des Trägers (5) erstrecken.

6. Vorrichtung nach einem der Ansprüche 1 bis 5, **dadurch gekennzeichnet, daß** die eine gute Wärmeisolierfähigkeit aufweisenden Schichten (17) aus einer einzigen kontinuierlichen Schicht bestehen.

7. Vorrichtung nach einem der Ansprüche 1 bis 6, **dadurch gekennzeichnet, daß** die eine gute Wärmeisolierfähigkeit aufweisenden Schichten (17) außen an den Seitenwänden (8) angeordnet sind, die zu dem Traggerüst des Trägers gehören.

8. Vorrichtung nach einem der Ansprüche 1 bis 7, **dadurch gekennzeichnet, daß** die genannten seitlichen Wände (8) des Lastträgers (5) sich am Boden im wesentlichen entlang der Heizelemente (13) der in dem genannten Bodenbereich (11) angeordneten Heizanordnung erstrecken und diese Heizelemente umgeben, damit in dem genannten Spaltraum (9) nach unten strömende Gase von unten und nach oben an den Heizelemente (6) zwecks Erhitzung entlang geführt werden.

9. Vorrichtung nach einem der Ansprüche 1 bis 8, **dadurch gekennzeichnet, daß** die Heizanordnung dünne Platten (15) enthält, die im Bodenbereich der Kammer mit gegenseitigen Abständen konzentrisch ineinander angeordnet sind, wobei die Zentrumsachse nach oben gerichtet ist, und daß die Platten zum Tragen von Heizelementen (13) vorgesehen sind, die an den Platten in den Räumen zwischen diesen angeordnet sind, so daß Gas zwischen den Platten an den Heizelementen entlang strömen kann.

10. Vorrichtung nach Anspruch 9, **dadurch gekennzeichnet, daß** die Heizelemente aus elektrisch beheizten Widerstanddrähten (13) bestehen.

## Revendications

1. Dispositif de cuve sous pression destiné à la compression isostatique à chaud, comprenant une chambre de four (3) entourée d'un élément isolant thermique (4), un support de charge (5) disposé dans la chambre et comportant un ou plusieurs plateaux plans (7) perforés pour être traversés par une circulation de gaz et conçus pour porter les charges à comprimer, et un ensemble (12) disposé dans la chambre et comprenant des éléments chauffants (13) pour chauffer le gaz présent dans la chambre, le dit support de charge comportant des parois latérales périphériques (8) et ménageant un espace (9) entre ces dernières et l'élément isolant pour permettre une circulation de gaz entre eux, du sommet vers le bas, autour du support, au moins l'élément chauffant qui produit la partie principale du chauffage de l'ensemble de chauffage étant disposé dans la région inférieure (11) de la chambre, **caractérisé en ce que** des portions considérables au moins des dites parois latérales du support sont pourvues de couches (17) présentant une bonne capacité d'isolation thermique, de façon que la différence de température entre la face intérieure des dites parois latérales et l'espace entre leur face extérieure et l'élément isolant se trouve accrue et qu'on obtienne ainsi une force d'entraînement pour une auto-convection des dits gaz.

2. Dispositif selon revendication 1, **caractérisé en ce que** tous les éléments chauffants (13) de l'ensemble de chauffage (12) sont disposés dans la région inférieure (11) de la chambre.

3. Dispositif selon la revendication 1 ou 2, **caractérisé en ce que** les dits éléments chauffants (13) disposés dans la région inférieure (11) de la chambre sont placés sous le plateau plan inférieur (7') du support de charge.

4. Dispositif selon l'une quelconque des revendications 1 à 3, **caractérisé en ce que** les dites couches (17) ayant une bonne capacité d'isolation thermique sont disposées au moins le long de surfaces des parois latérales placées à l'extérieur de volumes du support (5) conçus pour recevoir des charges.

5. Dispositif selon l'une quelconque des revendications 1 à 4, **caractérisé en ce que** les dites couches (17) présentant une bonne capacité d'isolation thermique s'étendent sensiblement sur toutes les parois latérales (8) du support (5).

6. Dispositif selon l'une quelconque des revendications 1 à 5, **caractérisé en ce que** les dites couches (17) présentant une bonne capacité d'isolation thermique forment une couche continue unique.

7. Dispositif selon l'une quelconque des revendications 1 à 6, **caractérisé en ce que** les dites couches (17) présentant une bonne capacité d'isolation thermique sont disposées à l'extérieur de parois latérales (8) appartenant à un châssis du support et sur celles-ci.

8. Dispositif selon l'une quelconque des revendications 1 à 7, **caractérisé en ce que** les dites parois latérales (8) du support de charge (5) sont disposées, à la partie inférieure, pour s'étendre sensiblement au-delà des éléments chauffants (13) de l'ensemble de chauffage placé dans la dite région inférieure (11), et entourer ces éléments, pour conduire des gaz s'écoulant vers le bas dans le dit espace (9) depuis le dessous et vers le haut au-delà des éléments chauffants, afin de chauffer ces gaz.

9. Dispositif selon l'une quelconque des revendications 1 à 8, **caractérisé en ce que** l'ensemble de chauffage comprend des plaques minces (15) placées dans la région inférieure (11) de la chambre, en étant l'une à l'intérieur de l'autre de façon concentrique en ménageant entre elles des espaces mutuels, avec un axe central dirigé vers le haut et conçues pour porter des éléments chauffants (13) disposés dans les espaces ménagés entre elles, de sorte que le gaz puisse s'écouler entre les dites plaques au-delà des éléments chauffants.

10. Dispositif selon la revendication 9, **caractérisé en ce que** les dits éléments chauffants sont constitués par des fils de résistance (13) chauffés électriquement.
